# EUROPEAN PATENT APPLICATION

(11) **EP 4 671 728 A1**
(43) Date of publication of application: **31.12.2025**
(21) Application number: 24759452.6
(22) Date of filing: 17.01.2024
(51) Int. Cl.: G01M 17/08

(54) **BOGIE HEALTH MONITORING METHOD, DEVICE AND SYSTEM**

(30) Priority: 21.02.2023 CN 202310146524
(71) Applicant: CRRC Qingdao Sifang Co., Ltd., Qingdao, Shandong 266111 (CN)
(72) Inventor: ZHANG, Xiongfei, Qingdao, Shandong 266111 (CN); CAO, Xiaoning, Qingdao, Shandong 266111 (CN); JU, Zengye, Qingdao, Shandong 266111 (CN); MA, Long, Qingdao, Shandong 266111 (CN); PAN, He, Qingdao, Shandong 266111 (CN)
(74) Representative: Prinz & Partner mbB
(86) International application number: PCT/CN2024/072672
(87) International publication number: WO 2024/174773

(57) **Abstract**

A bogie health monitoring method, device and system. The method comprises: acquiring a stress when the surface of a preset part on a main body of a composite bogie deforms, the preset part comprising a key part of the main body and regions where the main body is connected to parts by means of fasteners; determining a degree of damage of the main body; and predicting the remaining life of the composite bogie according to the stress and the degree of damage. Hence, according to the health monitoring method in the present application, the stress of the surface of the preset part on the main body of the composite bogie is acquired, the degree of damage of the bogie main body is determined, and then the remaining life of the composite bogie is predicted according to the degree of damage of the main body and the acquired stress, thereby ensuring the structural safety of the composite bogie and reducing maintenance costs.

## Description

This application claims the priority to Chinese Patent Application No. 202310146524.0, titled "METHOD, APPARATUS, AND SYSTEM FOR MONITORING HEALTH OF BOGIE", filed on February 21, 2023, with the China National Intellectual Property Administration, which is incorporated herein by reference in its entirety.

### FIELD

The present disclosure relates to the field of health monitoring for rail transit, in particular to a method, an apparatus, and a system for monitoring health of a bogie.

### BACKGROUND

Conventional bogies evolve into composite-material bogies, e.g., those made of carbon fiber reinforced polymer, to meet demands on light weight, low cost, and high strength. A main component of the bogie may be made of carbon fiber reinforced polymer, titanium alloy, stainless steel, or the like, and multiple materials at different components coordinate to reduce manufacturing costs and a weight of the bogie effectively. Health of the bogie may be monitored to learn a condition of the bogie. In conventional health monitoring techniques, stress and damage of the bogie are monitored, and a residual life of the bogie cannot be predicted.

Hence, a key focus of those skilled in the art is how to address the above technical issue.

### SUMMARY

An objective of embodiments of the present disclosure is providing a method, an apparatus, and a system for monitoring health of a bogie. A residual life of the bogie is predicted.

In order to address at least the above issue, a method for monitoring health of a bogie is provided according to an embodiment of the present disclosure. The method comprises: acquiring a stress on a surface of a predetermined part of a frame of a composite bogie when the predetermined part deforms, where the predetermined part comprises a critical part of the frame or a part of the frame which is connected to a component via a fastener; determining a degree of a damage in the frame; and predicting a residual life of the composite bogie according to the stress and the degree of the damage.

In an embodiment, predicting the residual life of the composite bogie according to the stress and the degree of the damage comprises: acquiring a service time till occurrence of the damage; determining a difference between the degree of the damage and a maximum allowable degree for the damage; determining an original ratio of the residual life to the service time according to a ratio of the difference to the degree of the damage; adjusting the original ratio according to a ratio of a predicted stress to be borne by the predetermined part to the stress to obtain a final ratio; and determining the residual life according to the final ratio and the service time.

In an embodiment, the method further comprises: determining a ratio of the stress to a preset stress threshold; determining whether the ratio is greater than a preset ratio threshold; and sending an alarm instruction to an alarm device, in a case that the ratio is greater than the preset ratio threshold, where the alarm instruction is configured to instruct the alarm device to issue an alarm.

In an embodiment, the method further comprises: determining whether the stress is greater than a preset stress threshold; and sending an alarm instruction to an alarm device, in a case that the stress is greater than the preset stress threshold, where the alarm instruction is configured to instruct the alarm device to issue an alarm.

In an embodiment, the method further comprises: acquiring an electrical signal representing a stress wave, where the stress wave is emitted by a driver and propagates through a surface and an interior of the critical part; comparing the electrical signal with a reference signal, where the reference signal represents the stress wave when the frame is undamaged; and determining, according to a result of the comparing, whether the frame is damaged.

In an embodiment, determining the degree of the damage of the frame comprises: determining a difference in amplitude between the electrical signal and the reference signal; and determining the degree of the damage according to the difference and predetermined correspondence between amplitudes and degrees of the damage.

An apparatus for monitoring health of a bogie is provided according to another embodiment of the present disclosure. The apparatus comprises: a first acquiring module, configured to acquire a stress on a surface of a predetermined part of a frame of a composite bogie when the predetermined part deforms, where the predetermined part comprises a critical part of the frame or a part of the frame which is connected to a component via a fastener; a first determining module, configured to determine a degree of a damage in the frame; and a predicting module, configured to predict a residual life of the composite bogie according to the stress and the degree of the damage.

A system for monitoring health of a bogie is further provided according to another embodiment of the present disclosure. The system comprises: a controller, and an optical fiber grating sensor connected with the controller. The controller is configured to perform the method according to any foregoing embodiment. The optical fiber grating sensor is disposed on the surface of the predetermined part and is configured to measure the stress when the predetermined part deforms. The predetermined part comprises: the critical part of the frame, or the part of the frame which is connected to the component via the fastener.

In an embodiment, the system further comprises: a driver, configured to emit a stress wave to the frame; and a piezoelectric sensor connected to the controller, where piezoelectric sensor is configured to detect the stress wave propagated through the surface and an interior of the critical part and convert the detected stress wave into an electrical signal.

In an embodiment, the system further comprises: an ultrasonic-guided-wave controller connected with the driver, where the ultrasonic-guided-wave controller is configured to control a frequency and power of the stress wave emitted by the driver.

Herein the method for monitoring the health of the bogie is provided. The method comprises: acquiring the stress on the surface of the predetermined part of the frame of the composite bogie when the predetermined part deforms, where the predetermined part comprises the critical part of the frame or the part of the frame which is connected to the component via the fastener; determining the degree of the damage in the frame; and predicting the residual life of the composite bogie according to the stress and the degree of the damage.

In such method, the stress on the surface of the predetermined part of the frame of the composite bogie is acquired, the degree of the damage in the frame is determined, and the residual life of the composite bogie is predicted according to the degree of the damage and the acquired stress. Structural safety of the composite bogie can be ensured, and maintenance costs can be reduced.

The apparatus and the system provided herein also have the above advantages.

### BRIEF DESCRIPTION OF THE DRAWINGS

Hereinafter drawings to be applied in embodiments of the present disclosure or in the conventional technology are briefly described, in order to illustrate technical solutions according to embodiments of the present disclosure or in the conventional technology more clearly. Apparently, the drawings in the following descriptions are only some embodiments of the present disclosure, and other drawings may be obtained by those skilled in the art based on the provided drawings without any creative effort.
FIG. 1 is a flowchart of a method for monitoring health of a bogie according to an embodiment of the present disclosure.
FIG. 2 is a schematic structural diagram of a composite bogie according to an embodiment of the present disclosure.
FIG. 3 is a schematic diagram of a region, in which a frame is connected to a component, of a composite bogie according to an embodiment of the present disclosure.
FIG. 4 is a flowchart of a warning process when monitoring health of a bogie according to an embodiment of the present disclosure.
FIG. 5 is a flowchart of a warning process when monitoring health of a bogie according to another embodiment of the present disclosure.
FIG. 6 is a structural diagram of an apparatus for monitoring health of a bogie according to an embodiment of the present disclosure.
FIG. 7 is a structural diagram of a system for monitoring health of a bogie according to an embodiment of the present disclosure.

### DETAILED DESCRIPTION

Hereinafter technical solutions in embodiments of the present disclosure are described clearly and completely in conjunction with the drawings in embodiments of the present closure, to enable those skilled in the art to better understand the solutions according to the present disclosure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Hereinafter various details are illustrated in description to facilitate full understanding of the present disclosure. The present disclosure may be implemented in a manner other than those described herein. Those skilled in the art may deduce by analogy without departing from a concept of the present disclosure. Hence, the present disclosure is not limited to specific embodiments disclosed herein.

As described in the background, in conventional health monitoring techniques, stress and damage of a bogie are monitored, and a residual life of the bogie cannot be predicted.

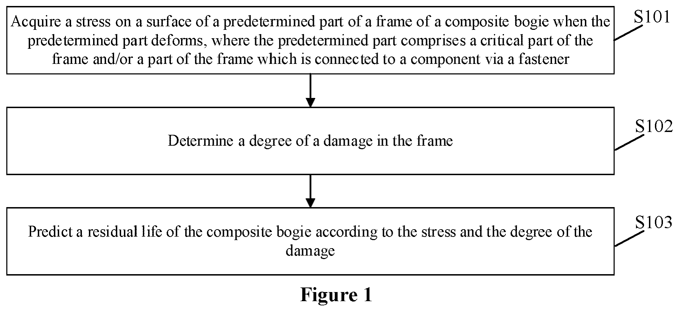

At least in view of the above, a method for monitoring health of a bogie is provided according to embodiments of the present disclosure. Reference is made to FIG. 1, where the method comprises following steps S101 to S103.

In step S101, a stress on a surface of a predetermined part of a frame of a composite bogie is acquired when the predetermined part deforms. The predetermined part comprises a critical part of the frame and/or a part of the frame which is connected to a component via a fastener.

A process of determining the critical part of the frame of the composite bogie may be as follows. Stress on each portion of the frame is simulated and obtained through a stress simulation model. Portion(s) of a certain percentage (e.g., 20% or 30%), which are ranked top among all portions according to a descending order of respective stress, are determined to serve as the critical part. Alternatively, portion(s) having the stress exceeding a preset stress threshold are determined to serve as the critical part.

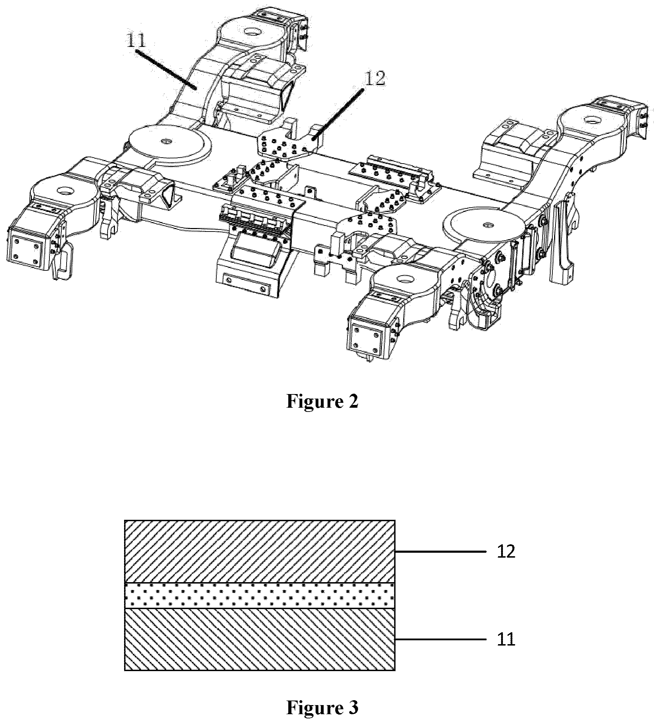

A schematic structural diagram of a composite bogie is as shown in FIG. 2. The composite bogie comprises a frame 11, of which a material is carbon fiber reinforced polymer, and different mounting brackets connected to the frame. The mounting brackets comprise components 12 of various materials, which include fiber reinforced polymer and metal materials such as low-alloy structural steel, stainless steel, and titanium alloy. The frame and the mounting brackets are separately formed and assembled through connections. The components and the frame are connected through, for example, an adhesive or a fastener. The fastener includes a bolt, a rivet, or both a bolt and a rivet.

Herein the stress at the part of the frame 11 that is connected with the component 12 via the fastener is collected, and the fastener includes, but is not limited to, a bolt or a rivet.

In a case that the component 12 made of metal and the frame 11 made of fiber reinforced polymer are connected via both the rivet and the bolt, the component 12 and the frame 11 may bonded in the rivet-connection region via a structural adhesive as shown in FIG. 3.

Herein a frequency of collecting the stress on the surface of the predetermined part of the frame is not limited. For example, the stress on the surface of the predetermined part of the frame may be collected in real time or collected at a preset interval.

In step S102, a degree of a damage in the frame is determined.

In step S103, a residual life of the composite bogie is predicted according to the stress and the degree of the damage.

In an embodiment, predicting the residual life of the composite bogie according to the stress and the degree of the damage comprises following steps S1031 to S1035.

In step S1031, a service time till occurrence of the damage is acquired.

A type of the damage includes, but is not limited to, a crack or delamination.

In step S1032, a difference between the degree of the damage and a maximum allowable degree for the damage is determined.

The difference is equal to the maximum allowable degree for the damage minus the current degree of the damage. For example, the damage is the crack, the current degree of the damage is a length m of the crack, and the maximum allowable degree for the damage is a crack length n, where n > m. In such case, the difference is equal to n-m.

In step S1033, an original ratio of the residual life to the service time is determined according to a ratio of the difference to the degree of the damage.

The original ratio of the residual life to the service time may be equal to the ratio of the difference to the degree of the damage.

In step S1034, the original ratio is adjusted according to a ratio of a predicted stress to be borne by the predetermined part to the stress to obtain a final ratio.

According to the damage consistency theory, the residual life of the composite bogie depends on magnitude of the subsequent stress. Hence, determination of the residual life of the composite bogie may refer to the ratio of the predicted stress to be borne by the predetermined part to the stress borne by the predetermined part. Herein the original ratio is adjusted according to the ratio of the predicted stress and the current stress on the predetermined part, such that the final ratio of the residual life to the service time is more accurate.

In step S1035, the residual life is determined according to the final ratio and the service time.

The residual life is equal to the service time multiplying the final ratio.

In the method provided herein, the stress on the surface of the predetermined part of the frame of the composite bogie is acquired, the degree of the damage in the frame is determined, and the residual life of the composite bogie is predicted according to the degree of the damage and the acquired stress.

On a basis of the foregoing embodiments, the method for monitoring health of the bogie may further comprise early warning on the damage in the composite bogie according to some embodiments. The early warning may be performed in two manners as illustrated hereinafter.

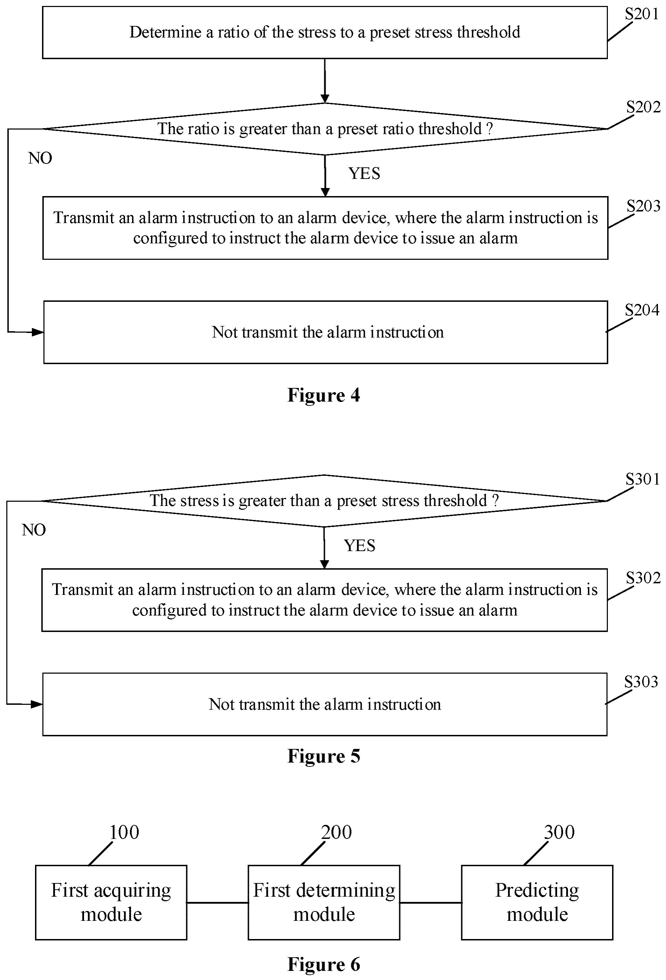

A first manner may refer to FIG. 4. A process for the early warning comprises following steps S201 to S203.

In step S201, a ratio of the stress to a preset stress threshold is determined.

The preset stress threshold is not limited herein and may be configured on requirement.

In step S202, it is determined whether the ratio is greater than a preset ratio threshold.

In step S203, an alarm instruction is transmitted to an alarm device, in a case that the ratio is greater than the preset ratio threshold. The alarm instruction is configured to instruct the alarm device to issue an alarm.

In a case that the ratio is less than or equal to the preset ratio threshold, it is not necessary to transmit the alarm instruction, i.e., early warning is not activated.

A second manner may refer to FIG. 5. A process for the early warning comprises following steps S301 to S302.

In step S301, it is determined whether the stress is greater than a preset stress threshold.

The preset stress threshold is not limited herein may be configured on requirement.

In step S302, an alarm instruction is transmitted to an alarm device, in a case that the stress is greater than the preset stress threshold. The alarm instruction is configured to instruct the alarm device to issue an alarm.

In a case that the stress is less than or equal to the preset stress threshold, it is not necessary to transmit the alarm instruction, i.e., early warning is not activated.

Hence, the stress on the surface of the predetermined part of the frame of the composite bogie is acquired, and a health status of the composite bogie is early warned according to the stress, such that the health of the composite bogie is monitored. In addition, the stress at the part of the frame connected to the component may be acquired to monitor the fastener connecting the frame and the component in an analogous manner. That is, a connection status of the fastener can be monitored, which addresses the difficulties in monitoring the connection status. Thereby, a fault of a loose connection in the composite bogie can be detected.

In an embodiment, the method for monitoring health of the bogie comprises following steps.

An electrical signal representing a stress wave is acquired. The stress wave is emitted by a driver and propagates through the surface and an interior of the critical part.

The electrical signal is compared with a reference signal. The reference signal is an electrical signal representing the stress wave when the frame is undamaged.

It is determined, according to a result of the comparing, whether the frame is damaged.

When the driver emits the stress wave to the frame of the composite bogie, the stress wave propagates in the frame, and a piezoelectric sensor detects the stress wave propagating through the frame and converts the detected stress wave into the electrical signal.

The reference signal may be acquired through following steps. The driver emits the stress wave toward the undamaged frame. The piezoelectric sensor detects the stress wave propagating through the undamaged frame and converts the detected stress wave into the reference signal.

In a case that the acquired electrical signal is identical to the reference signal or similarity between the electrical signal and the reference signal is smaller than or equal to a preset threshold, it is determined that the frame is undamaged. Otherwise, it is determined that the frame is damaged.

The electrical signal not only comprises a sub-signal for a surface of the critical part of the frame but also comprises a sub-signal for the interior of the critical part. Hence, difficulties of observing the interior of the bogie are addressed, and accuracy of monitoring the damage of the composite bogie is improved.

In an embodiment, determining the degree of the damage in the frame comprises following steps.

A difference in amplitude between the the electrical signal and the reference signal.

The degree of the damage is determined according to the difference in amplitude and predetermined correspondence between amplitudes and degrees of the damage.

The difference in amplitude may refer to: a difference between amplitude of the sub-signal representing the stress wave propagating through the surface of the critical part and amplitude of the reference signal, and a difference between amplitude of the sub-signal representing the stress wave propagating through the interior of the critical part and amplitude of the reference signal.

The correspondence between amplitudes and degrees of the damage may be predetermined through following steps. The stress wave is emitted to versions of the frame. The versions comprise damaged frames having different degrees of the damage and undamaged frame. The electrical signal representing the stress wave propagating in each damaged frame is acquired. The difference in amplitude between the electrical signal for each damaged frame and the electrical signal for the undamaged frame is determined. Thereby, the degree of the damage can be determined according to the respective differences in amplitude and the corresponding degrees of the damage .

Hereinafter a specific example is taken for illustrating the method for monitoring health of a bogie.

In step 1, a stress on a surface of a predetermined part of a frame of a composite bogie is acquired in real time when the predetermined part deforms, where the predetermined part comprises a critical part of the frame and/or a part of the frame which is connected to a component via a fastener.

In step 2, a ratio of the stress acquired in step 1 to a preset stress threshold is determined.

In step 3, it is determined whether the ratio is greater than a preset ratio threshold.

In step 4, an alarm instruction is transmitted to an alarm device in a case that the ratio is greater than the preset ratio threshold, where the alarm instruction is configured to instruct the alarm device to issue an alarm.

In step 5, no alarm instruction is transmitted in a case that the ratio is less than or equal to the preset ratio threshold.

In step 6, an electrical signal representing a stress wave propagating through a surface and an interior of the critical part is acquired, where a driver emits the stress wave toward the frame.

In step 7, the electrical signal is compared with a reference signal.

In step 8, the frame is determined to be undamaged, in a case that a difference between the electrical signal and the reference signal is smaller than or equal to a preset threshold.

In step 9, the frame is determined to be damaged, in a case that the difference between the electrical signal and the reference signal does not exceed a preset threshold.

In step 10, a difference in amplitude between the electrical signal and the reference signal is determined.

In step 11, a degree of a damage in the frame is determined according to the difference in amplitude and predetermined correspondence between amplitudes and degrees of the damage.

In step 12, a difference between the degree of the damage and a maximum allowable degree for the damage is determined.

In step 13, a service time till occurrence of the damage is acquired.

In step 14, an original ratio of the residual life to the service time is determined according to a ratio of the difference acquired in step 12 to the degree of the damage.

In step 15, the original ratio is adjusted according to a ratio of a predicted stress to be borne by the predetermined part to the stress to obtain a final ratio.

In step 16, the residual life is determined according to the final ratio and the service time.

Hereinafter illustrated is an apparatus for monitoring health of a bogie according to embodiments of the present disclosure. The apparatus embodiments and the foregoing method embodiments may refer to each other. Reference is made to FIG. 6, which is a structural diagram of an apparatus for monitoring health of a bogie according to an embodiment of the present disclosure. The apparatus comprises a first acquiring module 100, a first determining module 200, and a predicting module 300.

The first acquisition module 100 is configured to acquire a stress on a surface of a predetermined part of a frame of a composite bogie when the predetermined part deforms, where the predetermined part comprises a critical part of the frame and/or a part of the frame which is connected to a component via a fastener.

The first determining module 200 is configured to determine a degree of a damage in the frame.

The prediction module 300 is configured to predict a residual life of the composite bogie according to the stress and the degree of the damage.

The apparatus for monitoring health of the bogie provided herein is configured to implement the foregoing methods. Therefore, implementation of the apparatus may refer to the forgoing method embodiments. For example, the first acquiring module 100, the first determining module 200, and the predicting module 300 are configured to perform steps S101, S102, and S103, respectively in the method embodiments, and their implementation refer to description of the method embodiments and is not repeated herein.

In an embodiment, the prediction module 300 comprises an acquiring unit, a first determining unit, a second determining unit, an adjusting unit, and a third determining unit.

The acquiring unit is configured to acquire a service time till occurrence of the damage.

The first determining unit is configured to determine a difference between the degree of the damage and a maximum allowable degree for the damage.

The second determining unit is configured to determine an original ratio of the residual life to the service time according to a ratio of the difference to the degree of the damage.

The adjusting unit is configured to adjust the original ratio according to a ratio of a predicted stress to be borne by the predetermined part to the stress to obtain a final ratio.

The third determining unit is configured to determine the residual life according to the final ratio and the service time.

In an embodiment, the apparatus further comprises a second determining module, a first determination module and a first sending module.

The second determining module is configured to determine a ratio of the stress to a preset stress threshold.

The first determination module is configured to determine whether the ratio is greater than a preset ratio threshold.

The first sending module is configured to send an alarm instruction to an alarm device, in a case that the ratio is greater than the preset ratio threshold, where the alarm instruction is configured to instruct the alarm device to issue an alarm.

In an embodiment, the apparatus further comprises a second determination module, and a second sending module.

The second determination module is configured to determine whether the stress is greater than a preset stress threshold.

The second sending module is configured to sending an alarm instruction to an alarm device, in a case that the stress is greater than the preset stress threshold, where the alarm instruction is configured to instruct the alarm device to issue an alarm.

In an embodiment, the apparatus further comprises a second acquiring module, a comparing module, and a third determination module.

The second acquiring module is configured to acquire an electrical signal representing a stress wave, where the stress wave is emitted by a driver and propagates through a surface and an interior of the critical part.

The comparing module is configured to compare the electrical signal with a reference signal, where the reference signal represents the stress wave when the frame is undamaged.

The third determination module is configured to determine, according to a result of comparing the electrical signal with the reference signal, whether the frame is damaged.

In an embodiment, the first determining module 200 includes a third determining unit and a fourth determining unit.

The third determining unit is configured to a difference in amplitude between the electrical signal and the reference signal.

The fourth determining unit is configured to determine the degree of the damage according to the difference and predetermined correspondence between amplitudes and degrees of the damage.

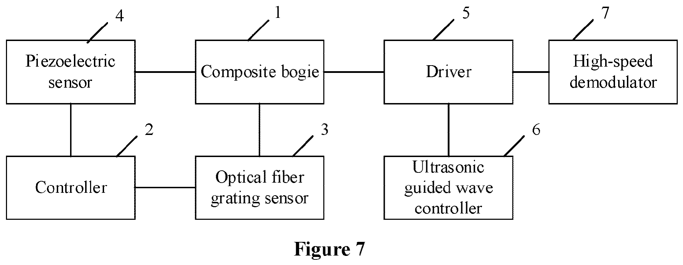

Reference is made to FIG. 7. A system for monitoring health of a bogie is further provided according to an embodiment of the present disclosure. The system comprises a controller 2 and an optical fiber grating sensor 3 that is connected with the controller 2.

The controller 2 is configured to perform the method according to any foregoing embodiment.

The optical fiber grating sensor 3 is disposed on a surface of a predetermined part of a frame of a composite bogie 1 and is configured to measure a stress of the predetermined part when the predetermined part deforms. The predetermined part comprises: a critical part of the frame, and/or a part of the frame which is connected to a component via a fastener.

In an embodiment, the system further comprises a driver 5 and a piezoelectric sensor 4.

The driver 5 is configured to emit a stress wave to the frame.

The piezoelectric sensor 4 is connected to the controller 2 and is configured to detect the stress wave propagated through the surface and an interior of the critical part and convert the detected stress wave into an electrical signa.

The piezoelectric sensor 4 may be arranged on the surface of the critical part and embedded in the interior of the critical part. For example, the piezoelectric sensor 4 is embedded in the interior of the critical part, the bogie 1 is made of carbon fiber reinforced polymer, and the piezoelectric sensor 4 is disposed between carbon fiber layers or inside a carbon fiber at the critical part of the frame of the bogie 1.

Hence, the piezoelectric sensor 4 is arranged on the surface of or inside the critical part, so that difficulties of observing a status of a composite component of the bogie are addressed. Thereby, damage monitoring is implemented. In an embedding design, the piezoelectric sensor is disposed at a predetermined position in the composite bogie before the frame is formed, e.g., it is located between fibers or between fiber layers. In such case, the sensor can be accurately positioned without destroying the structure.

In an embodiment, the system further comprises an ultrasonic guided wave controller 6.

The ultrasonic guided wave controller 6 is connected with the driver 4 and is configured to control a frequency and power of the stress wave emitted by the driver 4.

Active monitoring may be utilized, where the ultrasonic guided wave controller 6 transmits an electrical signal to the driver 4 to control the frequency and the power of the stress wave emitted by the driver 4. Thereby, the stress wave is generated by the driver 4.

In an embodiment, the system further comprises a high-speed demodulator 7.

The high-speed demodulator 7 is connected to the driver 4 and is configured to convert the stress wave emitted by the driver 4 into a displayable graph of an electrical signal. Hence, monitoring personnel can check the emitted stress wave.

The above embodiments are described in a progressive manner. Each of the embodiments is mainly focused on describing its differences from other embodiments, and reference may be made among these embodiments with respect to the same or similar parts. Since the apparatus disclosed in the embodiments correspond to the method disclosed in the embodiments, the description of the apparatus is simple, and reference may be made to the relevant part of the method.

Detailed description has been provided for the method, the apparatus, and the system for monitoring the health of the bogie according to embodiments of the present disclosure. A principle and embodiments of the present disclosure are described using specific examples. The embodiments are illustrated to facilitate understanding a method and a core idea of the present disclosure. Those skilled in the art may make several improvements and modifications to the present disclosure without departing from principles of the present disclosure. These improvements and modifications shall fall within the protection scope of the claims of the present disclosure.

## Claims

1. A method for monitoring health of a bogie, comprising:
acquiring a stress on a surface of a predetermined part of a frame of a composite bogie when the predetermined part deforms, wherein the predetermined part comprises:
a critical part of the frame, or
a part of the frame which is connected to a component via a fastener;
determining a degree of a damage in the frame; and
predicting a residual life of the composite bogie according to the stress and the degree of the damage.

2. The method according to claim 1, wherein predicting the residual life of the composite bogie according to the stress and the degree of the damage comprises:
acquiring a service time till occurrence of the damage;
determining a difference between the degree of the damage and a maximum allowable degree for the damage;
determining an original ratio of the residual life to the service time according to a ratio of the difference to the degree of the damage;
adjusting the original ratio according to a ratio of a predicted stress to be borne by the predetermined part to the stress to obtain a final ratio; and
determining the residual life according to the final ratio and the service time.

3. The method according to claim 1, further comprising:
determining a ratio of the stress to a preset stress threshold;
determining whether the ratio is greater than a preset ratio threshold; and
sending an alarm instruction to an alarm device, in a case that the ratio is greater than the preset ratio threshold, wherein the alarm instruction is configured to instruct the alarm device to issue an alarm.

4. The method according to claim 1, further comprising:
determining whether the stress is greater than a preset stress threshold; and
sending an alarm instruction to an alarm device, in a case that the stress is greater than the preset stress threshold, wherein the alarm instruction is configured to instruct the alarm device to issue an alarm.

5. The method according to any one of claims 1 to 4, further comprising:
acquiring an electrical signal representing a stress wave, wherein the stress wave is emitted by a driver and propagates through a surface and an interior of the critical part;
comparing the electrical signal with a reference signal, wherein the reference signal represents the stress wave when the frame is undamaged; and
determining, according to a result of the comparing, whether the frame is damaged.

6. The method according to claim 5, wherein determining the degree of the damage of the frame comprises:
determining a difference in amplitude between the electrical signal and the reference signal; and
determining the degree of the damage according to the difference and predetermined correspondence between amplitudes and degrees of the damage.

7. An apparatus for monitoring health of a bogie, comprising:
a first acquiring module, configured to acquire a stress on a surface of a predetermined part of a frame of a composite bogie when the predetermined part deforms, wherein the predetermined part comprises:
a critical part of the frame, or
a part of the frame which is connected to a component via a fastener;
a first determining module, configured to determine a degree of a damage in the frame; and
a predicting module, configured to predict a residual life of the composite bogie according to the stress and the degree of the damage.

8. A system for monitoring health of a bogie, comprising:
a controller, configured to perform the method according to any one of claims 1 to 6, and
an optical fiber grating sensor connected with the controller, wherein:
the optical fiber grating sensor is disposed on a surface of a predetermined part of a frame of a composite bogie and is configured to measure a stress of the predetermined part when the predetermined part deforms;
the predetermined part comprises: a critical part of the frame, or a part of the frame which is connected to a component via a fastener.

9. The system according to claim 8, further comprising:
a driver, configured to emit a stress wave to the frame; and
a piezoelectric sensor connected to the controller, wherein piezoelectric sensor is configured to detect the stress wave propagated through the surface and an interior of the critical part and convert the detected stress wave into an electrical signal.

10. The system according to claim 9, further comprising:
an ultrasonic-guided-wave controller connected with the driver, wherein the ultrasonic-guided-wave controller is configured to control a frequency and power of the stress wave emitted by the driver.
